# FASCICULE DE BREVET EUROPEEN

(11) **EP 2 564 168 B1**
(45) Date de publication et mention de la délivrance du brevet: **24.08.2016**
(21) Numéro de dépôt: 11707080.5
(22) Date de dépôt: 16.02.2011
(51) Int. Cl.: G01D 13/26, G01D 11/28, B60K 35/00, B60K 37/02

(54) **DISPOSITIF INDICATEUR**
ANZEIGEVORRICHTUNG
INDICATOR DEVICE

(30) Priorité: 18.10.2010 FR 1004083; 29.04.2010 DE 102010018721
(43) Date de publication de la demande: 06.03.2013
(73) Titulaire: Johnson Controls Technology Company, Holland, MI 49423 (US)
(72) Inventeur: DENISE, Sylvain, F-95490 Vaureal (FR)
(74) Mandataire: Schwöbel, Thilo K.
(86) Numéro de dépôt international: PCT/EP2011/000747
(87) Numéro de publication internationale: WO 2011/134561

(56) Documents cités:
- DE-A1- 19 737 679
- FR-A1- 2 936 600
- US-A1- 2007 252 684

## Description

La présente invention concerne un dispositif indicateur à aiguille tel que ceux utilisés notamment à bord des véhicules automobiles pour afficher la vitesse ou le régime moteur du véhicule ou d'un autre paramètre.

La planche de bord d'un véhicule automobile comprend généralement un tableau de bord, situé face au conducteur, qui comprend un ensemble d'indicateurs, notamment un indicateur de vitesses ou un compte-tours ou un indicateur d'autres paramètres du véhicule, qui peut être à aiguille.

L'aiguille de l'indicateur, commandée et entraînée en rotation par un moteur, ou mouvement, s'étend généralement devant un support sérigraphié portant des caractères d'indication (des graduations et des valeurs de vitesses, notamment), formant le cadran. Le support des caractères d'indication est nommé face avant.

Il est devenu commun de désirer faire apparaître outre un premier paramètre (par exemple une vitesse du véhicule ou une vitesse de rotation du moteur à combustion) aussi un deuxième paramètre, par exemple une vitesse de référence, sur le cadran. Le conducteur peut ainsi lire, sur le même indicateur, le premier paramètre et le deuxième paramètre. Cette lecture doit pouvoir être effectuée de jour comme de nuit. Un tel indicateur est connu de la publication américaine US 2007/0252684 A1. Par ailleurs, un indicateur est connue de la publication allemande DE 197 37 679 A1.

Cet indicateur n'est toutefois pas capable de présenter des informations supplémentaires qui sont utiles au conducteur du véhicule, par exemple la plage de valeurs de la vitesse de rotation du moteur pour une conduite économe.

La présente invention a notamment pour but de palier aux inconvénients de l'art connu, et notamment ceux cités ci-dessus, et a également pour but de proposer un dispositif indicateur qui peut être fabriqué de façon simple et efficace et à un coût de revient comparativement faible.

Suivant la présente invention, ce but est atteint, par un dispositif indicateur, notamment pour véhicule automobile, comportant un cadran , une première aiguille , et une deuxième aiguille, la première aiguille étant entrainée en rotation devant le cadran et autour d'un axe de rotation, la deuxième aiguille étant entrainée en rotation derrière le cadran et autour de l'axe de rotation, la deuxième aiguille comportant une portion d'extrémité visible en périphérie du cadran, la portion d'extrémité comprenant au moins un premier élément de marquage (M1) et un deuxième élément de marquage (M2), le premier élément de marquage (M1) et le deuxième élément de marquage (M2) étant séparés le long de la circonférence du cadran, le dispositif indicateur comportant un moyen d'éclairage de la portion d'extrémité (4') de la deuxième aiguille.

Ainsi, il est avantageusement possible de fournir d'avantage d'informations au conducteur du véhicule.

Selon un mode de réalisation préféré de la présente invention, la portion d'extrémité comprend seulement le premier élément de marquage (M1) et le deuxième élément de marquage (M2).

De par une telle réalisation du dispositif indicateur, il est avantageusement possible de fournir une information supplémentaire au conducteur sans que l'attention du conducteur soit inutilement attiré par les informations supplémentaires.

Selon un autre mode de réalisation préféré de la présente invention, la portion d'extrémité comprend le premier élément de marquage (M1), le deuxième élément de marquage (M2) et la partie périphérique liant le premier élément de marquage (M1) et le deuxième élément de marquage (M2).

De par une telle réalisation du dispositif indicateur, il est avantageusement possible de fournir l'information supplémentaire au conducteur de manière directe et intuitive.

Selon encore un autre mode de réalisation préféré de la présente invention, le premier élément de marquage (M1) et le deuxième élément de marquage (M2) sont séparés le long de la circonférence du cadran entre 20° et 70° par rapport à l'axe de rotation, de préférence entre 30° et 60°.

Il est encore plus préféré que le premier élément de marquage (M1) et le deuxième élément de marquage (M2) sont séparés le long de la circonférence du cadran entre 40° et 50°.

Selon encore un autre mode de réalisation préféré de la présente invention, le moyen d'éclairage de la portion d'extrémité est positionné de façon fixe par rapport à la deuxième aiguille.

Selon encore un autre mode de réalisation préféré de la présente invention, la deuxième aiguille (4) comprend un guide de lumière.

Selon encore un autre mode de réalisation préféré de la présente invention, le moyen d'éclairage de la portion d'extrémité est positionné à la portion d'extrémité.

De par une telle réalisation du dispositif indicateur, il est avantageusement possible d'illuminer la deuxième aiguille de manière simple et efficace.

Selon encore un autre mode de réalisation préféré de la présente invention, le moyen d'éclairage dégage une lumière de couleur différente dépendante de la position autour de l'axe de rotation de la deuxième aiguille ou dépendante de la position autour de l'axe de rotation de la première et deuxième aiguilles.

De par une telle réalisation du dispositif indicateur, il est avantageusement possible de signaler différents situations au conducteur du véhicule.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels:
la figure 1 est une vue schématique de face d'un dispositif indicateur comprenant une première aiguille et une deuxième aiguille selon une première réalisation de la présente invention,
la figure 2 est une vue schématique de face de la deuxième aiguille du dispositif indicateur selon la première réalisation de la présente invention,
la figure 3 est une vue schématique latérale de la deuxième aiguille du dispositif indicateur selon la première réalisation de la présente invention,
la figure 4 est une vue schématique de face d'un dispositif indicateur comprenant une première aiguille et une deuxième aiguille selon une deuxième réalisation de la présente invention,
la figure 5 est une vue schématique de face de la deuxième aiguille du dispositif indicateur selon la deuxième réalisation de la présente invention, et
la figure 6 est une vue schématique latérale de la deuxième aiguille du dispositif indicateur selon la deuxième réalisation de la présente invention.

### DESCRIPTION DES DESSINS

L'invention est ici décrite en application à un dispositif indicateur implanté dans un véhicule automobile, combinant par exemple l'affichage de la vitesse de rotation du moteur momentanée et l'affichage d'une plate de vitesses de rotation du moteur souhaité pour une conduite économe.

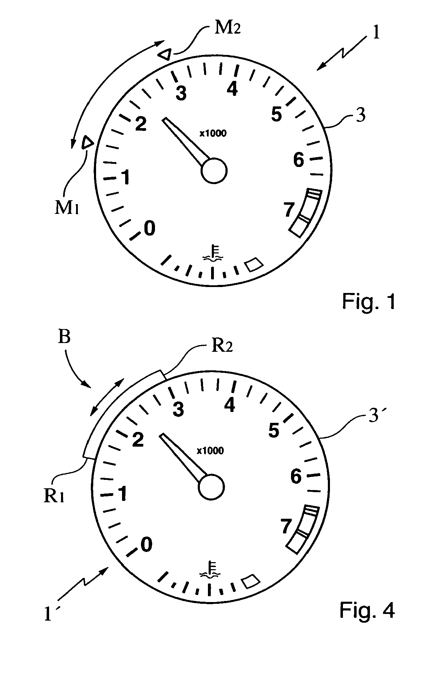

Dans les figures 1 et 4, le dispositif indicateur est généralement désigné en 1 et comprend un élément de support notamment sous forme d'une platine imprimée ou d'une plaque conductrice (non désigné par un signe de référence).

Un cadran, généralement désigné en 3, a par exemple une forme ronde ou de couronne et est positionné dans la direction vers un utilisateur du dispositif indicateur.

Une première aiguille est montée d'une telle manière par rapport au cadran 3 que la première aiguille peut être tournée de façon rotative autour d'un axe de rotation (non désigné par un signe de référence). Le mouvement de la première aiguille autour de l'axe de rotation est généralement entraîné à l'aide d'un moteur (non désigné par un signe de référence).

Le paramètre affiché par la première aiguille est par exemple la vitesse ou la vitesse de rotation du moteur du véhicule.

Une valeur minimale momentanée du paramètre affiché et une valeur maximale momentanée du paramètre affiché définissent une plage de valeurs du paramètre affiché le long du cadran 3 (ou autour de l'axe de rotation).

La plage indiquée par les valeurs minimale et maximale momentanées du paramètre affiché est par exemple définie selon les critères d'optimisation a) à d) mentionnées plus bas ou selon une combinaison de ces critères d'optimisation. Les critères d'optimisation ou les valeurs des critères d'optimisation peuvent varier en dépendance d'évènements ou d'effets extérieurs du véhicule ou en dépendance d'évènements ou d'effets internes au véhicule.
a) Consommation de carburant ou d'énergie; la plage indiquée par les valeurs minimale et maximale momentanées du paramètre affiché est définie par exemple à l'aide d'un programme d'économie tel qu'un moteur du véhicule (tel qu'un moteur à combustion interne) est utilisé de manière la plus économe.
b) Émissions des gazes d'échappement; la plage indiquée par les valeurs minimale et maximale momentanées du paramètre affiché est définie par exemple à l'aide d'un programme d'écologie tel qu'un moteur du véhicule (tel qu'un moteur à combustion interne) est utilisé de manière à produire un minimum de gazes d'échappement.
c) Sécurité; la plage indiquée par les valeurs minimale et maximale momentanées du paramètre affiché est définie par exemple à l'aide d'un programme de sécurité tel qu'un moteur du véhicule (tel qu'un moteur à combustion interne) est utilisé de manière à fournir le maximum de couple adapté pour une situation de route donné, notamment en cas d'une route enneigée.
d) Vitesse; la plage indiquée par les valeurs minimale et maximale momentanées du paramètre affiché est définie par exemple à l'aide d'un programme de vitesse tel qu'un moteur du véhicule (tel qu'un moteur à combustion interne) est utilisé de manière à fournir un maximum de couple.

La plage indiquée par les valeurs minimale et maximale momentanées du paramètre affiché est signalé au conducteur à travers une deuxième aiguille 4. La deuxième aiguille comprend une portion d'extrémité 4' visible (par le conducteur) en périphérie du cadran 3. La portion d'extrémité 4' comprenant au moins un premier élément de marquage M1 et un deuxième élément de marquage M2, le premier élément de marquage M1 et le deuxième élément de marquage M2 étant séparés le long de la circonférence du cadran 3 et indiquant ainsi la plage des valeurs minimale et maximale momentanées du paramètre affiché.

La deuxième aiguille 4 est entrainée par un moteur et par l'intermédiaire d'une unité de contrôle pendant l'opération du véhicule de telle manière que le premier élément de marquage M1 indique la valeur minimale et que le deuxième élément de marquage M2 indique la valeur maximale. Il est ainsi possible qu'à chaque moment, l'information sur la plage la plus économe des vitesses de rotation du moteur du véhicule peut être signalé au conducteur.

Il est possible que la deuxième aiguille est une aiguille de type aiguille en forme d'anneau.

Les figures 1 à 3 montrent une première réalisation de la deuxième aiguille 4 et les figures 4 à 6 montrent une deuxième réalisation de la deuxième aiguille 4.

La première réalisation de la deuxième aiguille 4 comprend un élément de base 40, comportant une section ronde. De l'élément de base 40 s'étend un premier élément intermédiaire 41. De l'extrémité du premier élément intermédiaire 41, un premier et un deuxième élément de bifurcation G1, G2 s'étendent de sorte que la deuxième aiguille selon la première réalisation a une forme d'Y. A l'extrémité opposée du premier élément intermédiaire 41, chaque élément de bifurcation G1, G2 comporte un élément de support T1, T2. Un premier élément de support T1 supporte le premier élément de marquage M1 et le deuxième élément de support T2 supporte le deuxième élément de marquage M2. De préférence, chaque élément de marquage M1, M2 forme une aiguille de type coudée.

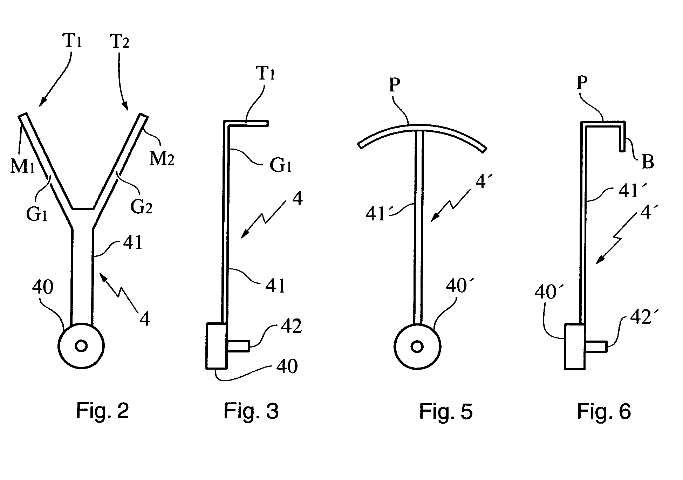

Dans la figure 3, il est visible qu'un premier élément cylindrique 42 s'étend de l'élément de base 40.

La deuxième réalisation de la deuxième aiguille 4 comprend le premier et le deuxième élément de marquage M1, M2 et un élément arqué B.

La deuxième réalisation de la deuxième aiguille 4 comprend aussi un élément de base 40, comportant une section ronde. De l'élément de base 40 s'étend un deuxième élément intermédiaire 41'. A l'extrémité du deuxième élément intermédiaire 41', un élément connecteur P est positionné. L'élément connecteur P relie le deuxième élément intermédiaire 41' à l'élément arqué B. De préférence, les éléments de marquage M1, M2 et l'élément arqué B forment une aiguille de type coudée.

Dans la figure 6, il est visible qu'un deuxième élément cylindrique 42' s'étend de l'élément de base 40.

Il est préféré selon la présente invention que les élément de marquage M1, M2, et l'élément arqué B comprennent au moins un organe d'illumination ou moyen d'éclairage, notamment sous forme de diode électroluminescente (LED), qui peut émettre de la lumière.

De préférence, le moyen d'éclairage fournit de la lumière avec une couleur différente selon un code prédéterminé. Par exemple, il est possible que la couleur "rouge" indique une valeur (de la première aiguille) en dehors de la plage préféré indiquée par la deuxième aiguille 4. Par ailleurs, la couleur "verte" pourrait correspondre à la situation que la valeur (de la première aiguille) est compris dans la plage préféré indiquée par la deuxième aiguille 4.

Il est aussi préféré que les éléments de marquage M1, M2 comprennent chacune au moins une LED ou que les éléments de marquage M1, M2 sont chacune au moins une LED.

## Revendications

1. Dispositif indicateur (1), notamment pour véhicule automobile, comportant un cadran (3), une première aiguille, et une deuxième aiguille (4), la première aiguille étant entrainée en rotation devant le cadran (3) et autour d'un axe de rotation, la deuxième aiguille (4) étant entrainée en rotation derrière le cadran (3) et autour de l'axe de rotation, la deuxième aiguille (4) comportant une portion d'extrémité (4') visible en périphérie du cadran (3), la portion d'extrémité (4') comprenant un premier élément de marquage (M1), le dispositif indicateur (1) comportant un moyen d'éclairage de la portion d'extrémité (4') de la deuxième aiguille (4), **caractérisé en ce que** la portion d'extrémité (4') comprend au moins un deuxième élément de marquage (M2), le premier élément de marquage (M1) et le deuxième élément de marquage (M2) étant séparés le long de la circonférence du cadran (3).

2. Dispositif indicateur (1) selon la revendication 1, **caractérisé en ce que** la portion d'extrémité (4') comprend seulement le premier élément de marquage (M1) et le deuxième élément de marquage (M2).

3. Dispositif indicateur (1) selon l'une quelconque des revendications précédentes, **caractérisé en ce que** la portion d'extrémité (4') comprend le premier élément de marquage (M1), le deuxième élément de marquage (M2) et la partie périphérique liant le premier élément de marquage (M1) et le deuxième élément de marquage (M2).

4. Dispositif indicateur (1) selon l'une quelconque des revendications précédentes, **caractérisé en ce que** le premier élément de marquage (M1) et le deuxième élément de marquage (M2) sont séparés le long de la circonférence du cadran (3) entre 20° et 70° par rapport à l'axe de rotation, de préférence entre 30° et 60°.

5. Dispositif indicateur (1) selon l'une quelconque des revendications précédentes, **caractérisé en ce que** le moyen d'éclairage de la portion d'extrémité (4') est positionné de façon fixe par rapport à la deuxième aiguille (4).

6. Dispositif indicateur (1) selon l'une quelconque des revendications précédentes, **caractérisé en ce que** la deuxième aiguille (4) comprend un guide de lumière.

7. Dispositif indicateur (1) selon l'une quelconque des revendications précédentes, **caractérisé en ce que** le moyen d'éclairage de la portion d'extrémité (4') est positionné à la portion d'extrémité (4').

8. Dispositif indicateur (1) selon l'une quelconque des revendications précédentes, **caractérisé en ce que** le moyen d'éclairage dégage une lumière de couleur différente dépendante de la position autour de l'axe de rotation de la deuxième aiguille (4) ou dépendante de la position autour de l'axe de rotation de la première et deuxième aiguilles (4).

## Patentansprüche

1. Anzeigevorrichtung (1), insbesondere für Kraftfahrzeug, mit einem Zifferblatt (3), einer ersten Zeigernadel und einer zweiten Zeigernadel (4), wobei die erste Zeigernadel vor dem Zifferblatt (3) und um eine Rotationsachse zur Drehung angetrieben wird, wobei die zweite Zeigernadel (4) hinter dem Zifferblatt (3) und um die Rotationsachse zur Drehung angetrieben wird, wobei die zweite Zeigernadel (4) einen Endteil (4') aufweist, der am Rand des Zifferblattes (3) sichtbar ist, wobei der Endteil (4') ein erstes Markierungselement (M1) umfasst, wobei die Anzeigevorrichtung (1) ein Mittel zur Beleuchtung des Endteils (4') der zweiten Zeigernadel (4) aufweist, **dadurch gekennzeichnet, dass** der Endteil (4') mindestens ein zweites Markierungselement (M2) umfasst, wobei das erste Markierungselement (M1) und das zweite Markierungselement (M2) entlang des Umfangs des Zifferblattes (3) getrennt sind.

2. Anzeigevorrichtung (1) nach Anspruch 1, **dadurch gekennzeichnet, dass** der Endteil (4') nur das erste Markierungselement (M1) und das zweite Markierungselement (M2) umfasst.

3. Anzeigevorrichtung (1) nach einem der vorhergehenden Ansprüche, **dadurch gekennzeichnet, dass** der Endteil (4') das erste Markierungselement (M1), das zweite Markierungselement (M2) und den umfänglichen Teil, der das erste Markierungselement (M1) und das zweite Markierungselement (M2) verbindet, umfasst.

4. Anzeigevorrichtung (1) nach einem der vorhergehenden Ansprüche, **dadurch gekennzeichnet, dass** das erste Markierungselement (M1) und das zweite Markierungselement (M2) entlang des Umfangs des Zifferblattes (3) zwischen 20° und 70° bezogen auf die Rotationsachse, vorzugsweise zwischen 30° und 60°, getrennt sind.

5. Anzeigevorrichtung (1) nach einem der vorhergehenden Ansprüche, **dadurch gekennzeichnet, dass** das Mittel zur Beleuchtung des Endteils (4') relativ zu der zweiten Anzeigenadel (4) feststehend positioniert ist.

6. Anzeigevorrichtung (1) nach einem der vorhergehenden Ansprüche, **dadurch gekennzeichnet, dass** die zweite Anzeigenadel (4) eine Lichtführung umfasst.

7. Anzeigevorrichtung (1) nach einem der vorhergehenden Ansprüche, **dadurch gekennzeichnet, dass** das Mittel zur Beleuchtung des Endteils (4') an dem Endteil (4') positioniert ist.

8. Anzeigevorrichtung (1) nach einem der vorhergehenden Ansprüche, **dadurch gekennzeichnet, dass** das Beleuchtungsmittel abhängig von der Position der zweiten Zeigernadel (4) um die Rotationsachse oder abhängig von der Position der ersten und zweiten Zeigernadel (4) um die Rotationsachse ein Licht verschiedener Farbe emittiert.

## Claims

1. Indicator device (1), in particular for a motor vehicle, comprising a dial (3), a first needle, and a second needle (4), the first needle being driven in rotation in front of the dial (3) and about an axis of rotation, the second needle (4) being driven in rotation behind the dial (3) and about the axis of rotation, the second needle (4) comprising an end portion (4') which is visible at the edge of the dial (3), the end portion (4') comprising a first marking element (M1), the indicator device (1) comprising a lighting means for the end portion (4') of the second needle (4), **characterised in that** the end portion (4') comprises at least one second marking element (M2), the first marking element (M1) and the second marking element (M2) being separated along the circumference of the dial (3).

2. Indicator device (1) according to claim 1, **characterised in that** the end portion (4') merely comprises the first marking element (M1) and the second marking element (M2).

3. Indicator device (1) according to either of the preceding claims, **characterised in that** the end portion (4') comprises the first marking element (M1), the second marking element (M2) and the edge part linking the first marking element (M1) and the second marking element (M2).

4. Indicator device (1) according to any of the preceding claims, **characterised in that** the first marking element (M1) and the second marking element (M2) are separated along the circumference of the dial (3) by between 20° and 70° about the axis of rotation, preferably between 30° and 60°.

5. Indicator device (1) according to any of the preceding claims, **characterised in that** the lighting means for the end portion (4') is fixed in position with respect to the second needle (4).

6. Indicator device (1) according to any of the preceding claims, **characterised in that** the second needle (4) comprises a light guide.

7. Indicator device (1) according to any of the preceding claims, **characterised in that** the lighting means for the end portion (4') is positioned on the end portion (4').

8. Indicator device (1) according to any of the preceding claims, **characterised in that** the lighting means emits a different colour of light depending on the position about the axis of rotation of the second needle (4) or depending on the position about the axis of rotation of the first and second needles (4).
